# DEMANDE DE BREVET EUROPEEN

(11) **EP 2 093 106 A1**
(43) Date de publication de la demande: **26.08.2009**
(21) Numéro de dépôt: 09151450.5
(22) Date de dépôt: 27.01.2009
(51) Int. Cl.: B60R 5/04, B60R 7/02, B60N 2/20, B60N 2/22

(54) **Tablette arrière de véhicule automobile intégrant un compartiment de rangement, et véhicule associé**

(30) Priorité: 21.02.2008 FR 0851106
(71) Demandeur: PEUGEOT CITROËN AUTOMOBILES S.A., 78140 Vélizy Villacoublay (FR)
(72) Inventeur: Bertrand Belanger, Pascal, 78280, GUYANCOURT (FR)

(57) **Abrégé**

L'invention concerne principalement une tablette arrière de véhicule automobile pourvue d'un compartiment de rangement accessible depuis l'habitacle du véhicule par actionnement d'au moins un couvercle fait dans la dite tablette, qui est essentiellement **caractérisée en ce que** le couvercle (18,18',18a-f) est solidaire de la partie supérieure (10,11,12) d'au moins un dossier de siège arrière (13,14,15) qu'il entraîne en mouvement en passant d'une position rabattue à une position dégagée permettant d'accéder au compartiment de rangement (4).

## Description

L'invention concerne une tablette arrière de véhicule qui est pourvue d'un compartiment de rangement accessible depuis l'intérieur de ce véhicule.

Une telle tablette est notamment connue de la publication EP 713 805 dans laquelle une tablette arrière comporte des sections dont le coulissement vers l'habitacle oblige à basculer vers l'avant les dossiers de siège arrière disposés devant.

La publication FR 2 870 495 décrit également une tablette arrière intégrant un compartiment de rangement qui est accessible depuis l'habitacle du véhicule par actionnement d'un couvercle fait dans la dite tablette. Pour ce faire, le couvercle est articulé au cadre support de la tablette de sorte que lorsque le couvercle est ouvert depuis l'intérieur du véhicule par un occupant des places arrière, cet occupant doit se relever pour accéder au dit compartiment. Par ailleurs, dans un tel système, le volume du compartiment est limité.

L'invention se propose de pallier aux inconvénients précités.

A cet effet, la tablette arrière de véhicule automobile est pourvue d'un compartiment de rangement accessible depuis l'habitacle du véhicule par actionnement d'au moins un couvercle fait dans la dite tablette et est caractérisée en ce que le couvercle de la tablette est solidaire de la partie supérieure d'au moins un dossier de siège arrière qu'il entraîne en mouvement en passant d'une position rabattue à une position dégagée permettant d'accéder au compartiment de rangement.

Selon une première variante, le couvercle de la tablette est monté rotatif autour d'un axe transversal au véhicule et situé au niveau du bord inférieur de la partie supérieure du dossier de siège arrière.

Selon une deuxième variante, le couvercle de la tablette est monté rotatif autour d'un axe transversal au véhicule et situé au niveau de la paroi supérieure (6) de la dite tablette.

De préférence, le couvercle est en coupe longitudinale approximativement en forme de L, dont l'une des deux branches s'étend le long de la paroi supérieure du compartiment de rangement et l'autre branche s'étend le long de la partie supérieure du dossier de siège arrière.

Avantageusement, le compartiment de rangement s'étend sur toute la largeur de la banquette arrière.

De façon préférentielle, la largeur du couvercle correspond à la largeur du ou des parties supérieures de dossier de siège arrière du/desquels ce couvercle est solidaire, et en ce que le couvercle est solidaire de la partie supérieure de l'un, de deux ou de trois dossiers sièges arrières.

On peut en outre prévoir que la tablette comporte un, deux ou trois couvercles dans la limite du nombre de sièges arrière constituant la banquette arrière.

Avantageusement, la paroi inférieure du compartiment de rangement présente en coupe longitudinale au moins une marche descendante vers la banquette arrière.

On peut également prévoir que le compartiment de rangement s'étende longitudinalement depuis les dossiers de siège arrière jusqu'à environ la moitié de la tablette et se prolonge par un logement de pare soleil qui s'étend sur la deuxième moitié de la tablette jusqu'à la vitre arrière.

En outre, la partie supérieure du dossier de siège arrière peut comporter un appui tête réglable entre une position haute et une position basse.

Enfin, l'invention porte également sur un véhicule automobile intégrant une tablette telle que décrite précédemment.

L'invention sera mieux comprise, et d'autres buts, caractéristiques, détails et avantages de celle-ci apparaîtront plus clairement au cours de la description explicative qui va suivre faite en référence aux dessins schématiques annexés donnés uniquement à titre d'exemple illustrant deux modes de réalisation de l'invention et dans lesquels :
- la figure 1 est une vue en perspective de la tablette de l'invention selon une première variante,
- la figure 2 est une vue en coupe longitudinale de la tablette de la figure 1 lorsque le couvercle est en position rabattue et que l'appui tête est en position basse ;
- la figure 3 est une vue en coupe longitudinale de la tablette de la figure 1 lorsque le couvercle est en position rabattue et que l'appui tête est en position haute ;
- la figure 4 est une vue en coupe longitudinale de la tablette de la figure 1 lorsque le couvercle est en position dégagée ;
- la figure 5 est une vue en coupe longitudinale de la tablette de la figure 1 lorsque le couvercle est en position rabattue et que le compartiment de rangement renferme des objets;
- la figure 6 est une vue en coupe longitudinale de la tablette de l'invention selon une deuxième variante lorsque le couvercle est en position dégagée ;
- la figure 7 est une vue en coupe longitudinale de la tablette de la figure 6 lorsque le couvercle est en position rabattue et que le compartiment de rangement renferme des objets;
- la figure 8 est une vue de dessus d'un véhicule automobile comportant la tablette de l'invention pourvue d'un unique couvercle sur toute la largeur de la banquette arrière ;
- la figure 9 est une vue de dessus d'un véhicule automobile comportant la tablette de l'invention pourvue d'un unique couvercle qui s'étend sur la largeur du siège central de la banquette arrière ;
- la figure 10 est une vue de dessus d'un véhicule automobile comportant la tablette de l'invention pourvue de trois couvercles de même largeur;
- la figure 11 est une vue de dessus d'un véhicule automobile comportant la tablette de l'invention pourvue de deux couvercles de même largeur;
- la figure 12 est une vue de dessus d'un véhicule automobile comportant la tablette de l'invention pourvue de trois couvercles de largeur différente; et
- la figure 13 est une vue de dessus d'un véhicule automobile comportant la tablette de l'invention pourvue de deux couvercles de largeur différente.

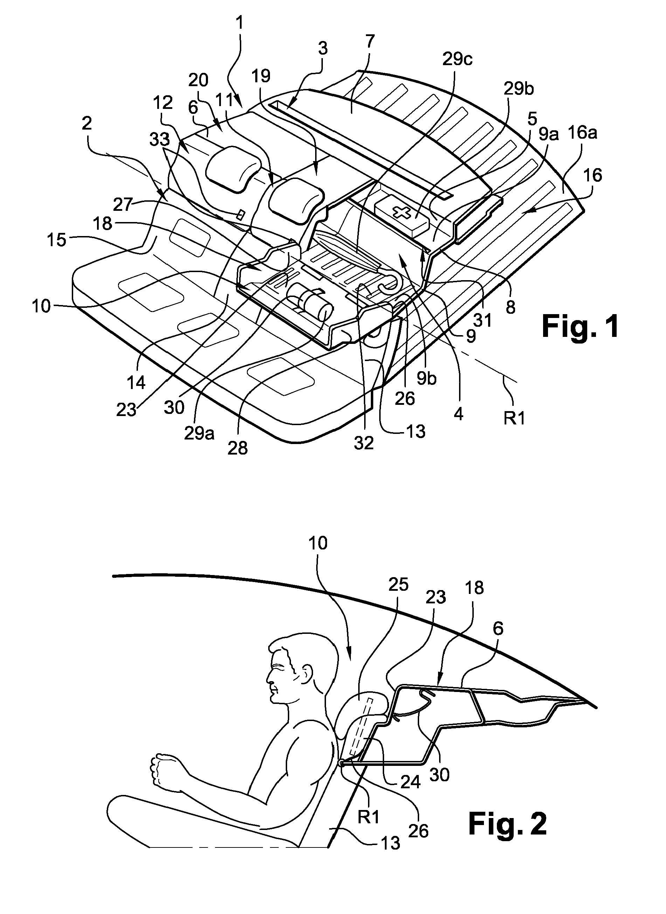

Comme illustré sur la figure 1, une tablette arrière de véhicule 1 s'étend longitudinalement depuis la vitre arrière non représentée jusqu'à la banquette arrière 2 au dessus du coffre du véhicule 16 en étant sensiblement parallèle au plancher 16a de ce coffre 16, et s'étend transversalement sur toute la largeur de la banquette 2.

La tablette 1 comporte une première partie formant logement de pare soleil 3 du coté de la vitre arrière et une deuxième partie formant compartiment de rangement 4 dans le prolongement longitudinal du logement pare soleil 3 jusqu'à la banquette arrière 2, le logement de pare soleil 3 et le compartiment de rangement 4 présentant une longueur sensiblement identique.

Plus précisément, le compartiment de rangement 4 s'étend longitudinalement depuis une paroi transversale 5 séparant ce compartiment 4 du logement de pare soleil 3 jusqu'à la partie supérieure respective 10,11,12 des trois dossiers de sièges arrières adjacents 13,14,15 constituant la banquette arrière 2 qui sont montés articulés en rotation vers l'avant du véhicule pour permettre d'augmenter le volume du coffre 16.

Par ailleurs, le compartiment de rangement 4 comporte une paroi supérieure 6 qui est en affleurement avec la paroi supérieure 7 du logement de pare soleil 3, et une paroi inférieure 8 présentant une marche d'escalier descendante 9 en direction de la banquette arrière 2 formant une étagère de rangement 9a et un fond 9b.

Dans cette variante de réalisation, le compartiment 4 comporte trois couvercle 18, 19, 20 dont l'un 18 est représenté en position dégagée et que l'on décrit de façon plus détaillée ci-après, les deux autres couvercles 19,20 étant semblables en structure et en fonctionnement.

Le couvercle 18 s'étend longitudinalement depuis la paroi transversale 5 jusqu'à la partie supérieure 10 du dossier de siège arrière concerné 13, laquelle partie supérieure 10 fait partie intégrante du couvercle 18.

En coupe longitudinale représentée sur la figure 2, ce couvercle 18 présente sensiblement une forme de L dont l'une des deux branches correspond à la paroi supérieure 6 du compartiment 4 depuis la paroi transversale 5 jusqu'à la partie supérieure 10 du dossier de siège 13, et l'autre branche correspond à la partie supérieure 10 du dossier de siège arrière 13 et s'étend jusqu'au bord inférieur 26 de cette partie supérieure 10 de dossier de siège arrière 13.

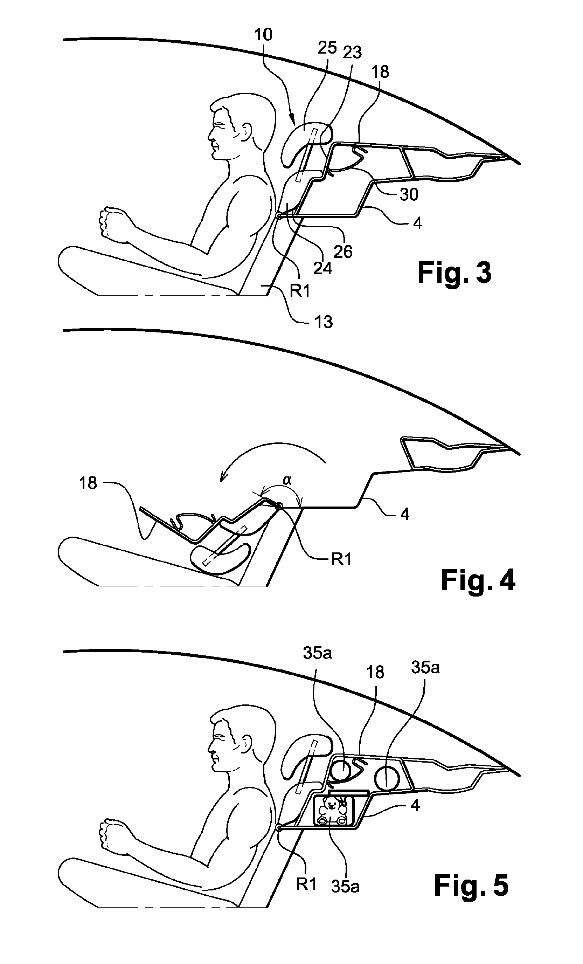

Cette partie supérieure 10 du dossier de siège arrière 13 est faite d'une paroi rigide 23 sur laquelle est solidarisé un coussin supérieur 24 et un appui-tête 25 réglable en hauteur entre une position basse (figure 2) et une position haute (figure 3).

De retour à la figure 1, on prévoit également de part et d'autre du couvercle 18 des montants longitudinaux 27,28.

En outre, le compartiment 4 est équipé d'une sangle 30 pour maintenir en place un objet 29a contre la paroi 23 de la partie supérieure 10 du dossier de siège arrière 13. Le compartiment 4 est également équipé d'un bord transversal 31 pour éviter qu'un objet 29b disposé sur l'étagère 9a ne tombe vers l'avant. Enfin, le fond 9b du compartiment 4 comporte des nervures anti glissement 32 pour maintenir en place un objet 29c posé sur ce fond 9b.

Selon cette variante de réalisation, le couvercle 18 est monté rotatif autour d'un axe de rotation transversale R1 situé à l'extrémité avant du bord inférieur 26 de la partie supérieure 10 du dossier de siège arrière 13.

L'ouverture du couvercle 18 est actionnée par l'intermédiaire d'une poignée 33 visible sur la figure 1 pour les couvercles rabattus 19,20.

L'ouverture de ce couvercle 18 peut être assistée à l'ouverture d'un compensateur ou d'un ressort non représentés.

On décrit le fonctionnement du couvercle 18 de la tablette 1 de la figure 1 en référence aux figures 2 à 5.

Sur la figure 2, le couvercle 18 est en position rabattue et l'appui tête 25 en position basse.

Sur la figure 3, l'appui tête 25 est représenté en position haute tandis que le couvercle est toujours en position rabattue.

Sur la figure 4, le couvercle 18 a été amené en position dégagée par pivotement vers l'avant autour de l'axe de rotation R1 d'un angle α d'environ 135°C. Le compartiment 18 est alors accessible aux occupants de la banquette arrière.

Et sur la figure 5, des objets 35a ont été disposés dans le compartiment 4, et le couvercle 18 a été ramené dans sa position rabattue par pivotement vers l'arrière autour de l'axe 22.

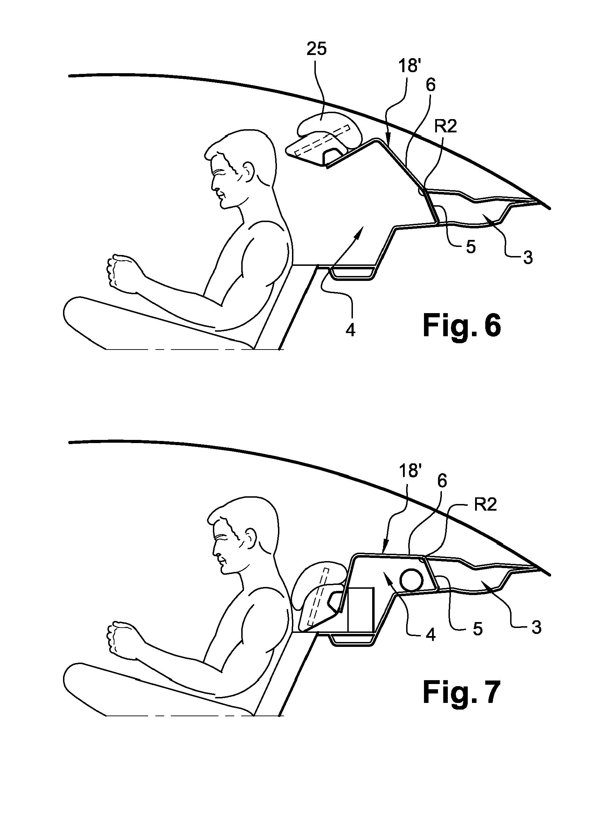

On décrit le fonctionnement de la tablette 1 pourvue d'un compartiment 4 selon une deuxième variante en référence aux figures 6 et 7.

Selon cette variante, l'axe de pivotement transversal R2 du couvercle 18' est situé sur la paroi supérieure 6 du compartiment 4 au niveau de la paroi transversale 5 séparant le compartiment 4 du logement de pare soleil 3.

Le reste de la tablette 1 et de ses éléments constitutifs sont analogues à ceux décrits en référence à la première variante.

Par conséquent, pour amener le couvercle 18' en position dégagée, on le fait pivoter autour de l'axe R2 vers l'arrière du véhicule après avoir préalablement positionné l'appui tête 25 en position basse pour permettre l'ouverture maximale du couvercle 18'.

Inversement, pour ramener le couvercle 18' en position rabattue, ce couvercle 18' est ramené en pivotement autour de l'axe R2 vers l'avant du véhicule.

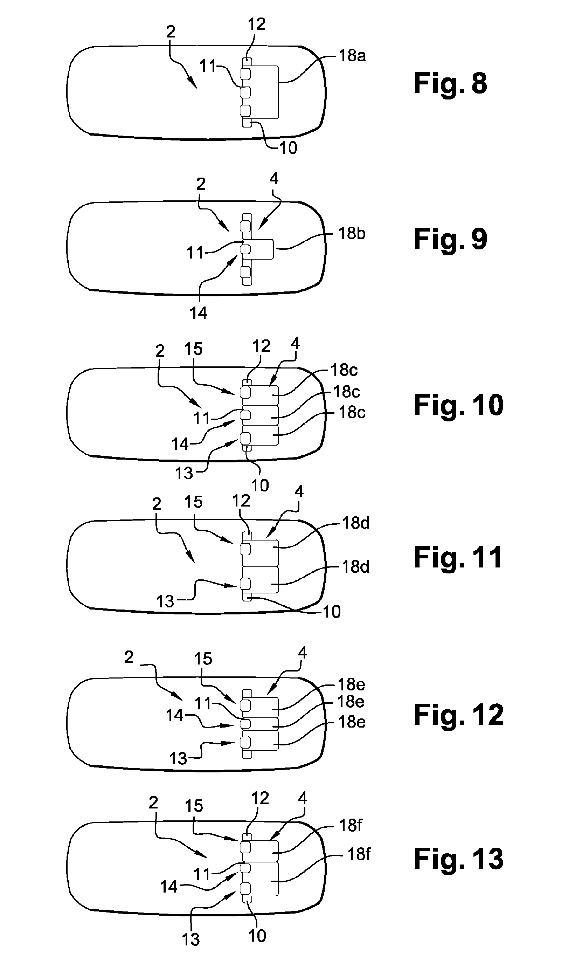

Les figures 8 à 13 représentent plusieurs configurations possibles de couvercles.

Pour toutes ses dispositions, le compartiment de rangement 4 s'étend sur toute la largeur de la banquette arrière, seul(s) le ou les couvercles diffèrent par leur nombre et/ou leur disposition.

Sur la figure 8, le couvercle 18a est unique et s'étend transversalement sur toute la largeur de la banquette arrière 2. Les trois parties supérieures respectives des trois dossiers de sièges arrières adjacents 10,11,12 forment ainsi partie intégrante du couvercle 18a.

Sur la figure 9, le compartiment 4 ne comporte qu'un seul couvercle 18b disposé derrière le siège central 14 dans l'alignement longitudinal de ce siège central 14. Dans cette configuration, seule la partie supérieure 11 de ce dossier central de siège arrière 14 fait partie intégrante du couvercle 18b.

Sur la figure 10, le compartiment 4 comporte trois couvercles indépendants de même largeur 18c respectivement disposés derrière chacun des trois dossiers de sièges arrières de même largeur 13,14,15. Dans cette configuration, les parties supérieures 10,11,12 des dossiers de sièges arrières 13,14,15 forment partie intégrante des trois couvercles respectifs 18c.

Sur la figure 11, la banquette arrière 2 ne comporte que deux sièges arrière et donc deux dossiers de sièges arrière de même largeur 13,15. Le compartiment 4 comporte deux couvercles 18d respectivement disposés derrière chacun des deux dossiers de siège arrière 13,15. Dans cette configuration, les parties supérieures 10, 12 des deux dossiers de sièges arrières 13, 15 forment partie intégrante des deux couvercles respectifs 18d1, 18d2.

Sur la figure 12 est représentée une configuration dans laquelle le compartiment 4 comprend trois couvercles 18e. Cette configuration est similaire à celle de la figure 10, sauf en ce que le dossier de siège central 14 est de largeur inférieure à la largeur des deux autres sièges 13,15. Par conséquent, le couvercle central 18e est également de plus petite largeur puisqu'il intègre la partie supérieure 11 du dossier de siège central 14 et correspond à la largeur de ce dossier 14.

Sur la figure 13, le compartiment 4 comporte deux couvercles 18f. Cette configuration est similaire à celle de la figure 11 sauf en ce que la banquette arrière 2 comporte trois dossiers de sièges 13,14,15 et en ce que l'un des deux couvercles 18f est disposé à l'arrière et dans l'alignement longitudinal de deux dossiers de sièges adjacents 13,14, de sorte que les parties supérieures 10,11 de ces deux dossiers de sièges adjacents 13,14 font partie intégrante du couvercle concerné 18f et que la largeur de ce couvercle 18f est ainsi supérieure à la largeur de l'autre couvercle 18f.

La tablette de l'invention présente ainsi de nombreux avantages.

D'abord, lorsque le couvercle est en position rabattue, les objets disposés dans le compartiment ne sont pas visibles depuis l'extérieur du véhicule ce qui permet d'éviter les risques de vol et d'effraction.

Aussi, le volume du compartiment est important, notamment par la forme en marche d'escalier de la paroi inférieure de ce compartiment qui utilise un volume peu valorisé dans un véhicule.

Par ailleurs, l'intégration de la partie supérieure des dossiers de siège arrière dans le couvercle du compartiment permet un accès facilité à ce compartiment depuis la banquette arrière.

Enfin, les objets contenus dans le compartiment ne peuvent pas être projetés vers l'habitacle lorsque le couvercle est en position rabattue ce qui assure la sécurité des passagers en permettant de transporter des objets d'utilisation courante dans le véhicule en toute sécurité.

## Revendications

1. Tablette arrière de véhicule automobile pourvue d'un compartiment de rangement accessible depuis l'habitacle du véhicule par actionnement d'au moins un couvercle fait dans la dite tablette, **caractérisée en ce que** le couvercle (18,18',18a-f) de la tablette (1) est solidaire de la partie supérieure (10,11,12) d'au moins un dossier de siège arrière (13,14,15) qu'il entraîne en mouvement en passant d'une position rabattue à une position dégagée permettant d'accéder au compartiment de rangement (4).

2. Tablette selon la revendication 1, **caractérisée en ce que** le couvercle (18) de la tablette (1) est monté rotatif autour d'un axe transversal au véhicule (R1) et situé au niveau du bord inférieur (26) de la partie supérieure (11) du dossier de siège arrière (13).

3. Tablette selon la revendication 1, **caractérisée en ce que** le couvercle (18') de la tablette (1) est monté rotatif autour d'un axe transversal au véhicule (R2) et situé au niveau de la paroi supérieure (6) de la dite tablette (1).

4. Tablette selon l'une quelconque des revendications précédentes, **caractérisée en ce que** le couvercle (18,18') est en coupe longitudinale approximativement en forme de L, dont l'une des deux branches s'étend le long de la paroi supérieure (6) du compartiment de rangement (4) et l'autre branche s'étend le long de la partie supérieure (11) du dossier de siège arrière (13).

5. Tablette selon la revendication 4, **caractérisée en ce que** le compartiment de rangement (4) s'étend sur toute la largeur de la banquette arrière.

6. Tablette selon la revendication 5, **caractérisée en ce que** la largeur du couvercle (18,18',18a-f) correspond à la largeur du ou des parties supérieures (10,11,12) de dossier de siège arrière (12,13,14) du/desquels ce couvercle (18,18',18a-f) est solidaire, et **en ce que** le couvercle (18,18',18a-f) est solidaire de la partie supérieure (10,11,12) de l'un, de deux ou de trois dossiers sièges arrières (12,13,14).

7. Tablette selon la revendication 6, **caractérisé en ce qu'**elle comporte un, deux ou trois couvercles (18,18',18a-f) dans la limite du nombre de sièges arrière constituant la banquette arrière (2).

8. Tablette selon l'une quelconque des revendications précédentes, **caractérisée en ce que** la paroi inférieure (8) du compartiment de rangement (4) présente en coupe longitudinale au moins une marche descendante (9) vers la banquette arrière (2).

9. Tablette selon l'une quelconque des revendications précédentes, **caractérisé en ce que** le compartiment de rangement (4) s'étend longitudinalement depuis les dossiers de siège arrière (13,14,15) jusqu'à environ la moitié de la tablette (1) et se prolonge par un logement de pare soleil (3) qui s'étend sur la deuxième moitié de la tablette (1) jusqu'à la vitre arrière.

10. Tablette selon l'une quelconque des revendications précédentes, **caractérisé en ce que** la partie supérieure (10,11,12) du dossier de siège arrière (13,14,15) comporte un appui tête (25) réglable entre une position haute et une position basse.

11. Véhicule automobile intégrant une tablette selon l'une quelconque des revendications 1 à 8.
